# EUROPEAN PATENT APPLICATION

(11) **EP 4 176 998 A1**
(43) Date of publication of application: **10.05.2023**
(21) Application number: 22196530.4
(22) Date of filing: 20.09.2022
(51) Int. Cl.: B23K 20/10, B23K 20/26

(54) **MODULAR ULTRASONIC METAL WELDING FRAME**

(30) Priority: 03.11.2021 CN 202122672280 U
(71) Applicant: Branson Ultraschall Niederlassung der Emerson Technologies GmbH & Co. OHG, 63128 Dietzenbach (DE)
(72) Inventor:
(74) Representative: HWP Intellectual Property

(57) **Abstract**

The present invention discloses a modular ultrasonic metal welding frame including a functional integration module for performing welding operation, and an installation module detachably connected to a bottom or side of the function integration module respectively. The function integration module includes a control unit, an execution unit, a triplet unit and a frame unit for providing a support and installation surface. Compared with the prior art, the present invention adopts the modular ultrasonic metal welding frame, which realizes a variety of configuration structures, and is suitable for different installation application situations, greatly improving an compatibility of the whole structure, ensuring meeting installation needs of an automatic production line, and at the same time, expanding operation spaces and improving operating convenience.

## Description

### TECHNICAL FIELD

The present invention relates to the technical field of ultrasonic welding, and in particular to a modular ultrasonic metal welding frame.

### BACKGROUND

An ultrasonic metal welding frame is a part of an ultrasonic metal welding machine, which together with an ultrasonic metal welding generator forms a complete ultrasonic metal welding device. The ultrasonic metal welding generator is used as a power supply of the welding machine for converting industrial power into ultrasonic welding power source, and has its own control system. The ultrasonic metal welding frame is an executor of the welding machine, which directly performs the welding. The ultrasonic metal welding generator outputs electric energy with a frequency, which is converted into mechanical energy with the same frequency by means of an ultrasonic triplet fixed on the ultrasonic metal welding frame. An execution module of the ultrasonic metal welding frame outputs a pressure required by the welding machine. The pressure with vibration is finally transmitted to a workpiece to be welded by a welding head. The welding is completed under cooperation of the heat melting and the pressure, and a desired product is finally obtained by processing.

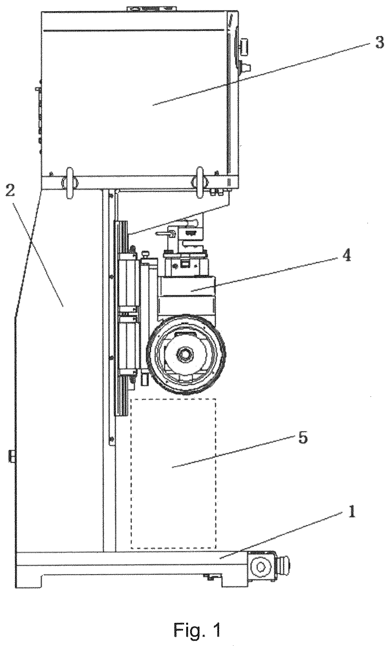

A typical ultrasonic metal welding frame is shown in FIG. 1, which mainly includes a base portion 1, a frame portion 2, a control portion 3 and an execution portion 4, and a dotted box below the execution portion 4 illustrates an operating space 5 which is generally fixed after the whole frame is determined, without expansibility. The ultrasonic metal welding frame designed by this way can only be applied to a single machine and small batch production since the operating space is unchangeable after the frame is determined. However, with the continuous development of industrial automation, automatic production lines are increasingly adopted, and more and more strict requirements are raised for various corresponding matching production equipment. When the traditional ultrasonic metal welding frame is adapted to the automatic production line, on the one hand, it is difficult to be well matched and cannot meet the requirements of the automatic production line; on the other hand, it will lead to a very limited operating space and poor operating convenience, which is unfavorable for manufacturing efficiently.

### SUMMARY

The object of the present invention is to provide a modular ultrasonic metal welding frame in order to overcome the defects of the prior art and meet requirements of matching automatic production lines, thereby expanding operating spaces and improving operating convenience.

The purpose of the present invention can be realized through the following technical solutions: a modular ultrasonic metal welding frame includes a functional integration module for performing welding operation, and an installation module detachably connected to a bottom or side of the function integration module respectively, the function integration module includes a control unit, an execution unit, a triplet unit, and a frame unit for providing a support and installation surface.

Further, the installation module is configured as a vertical installation module or a side-back installation module.

Further, the vertical installation module is connected to a bottom of the frame unit.

Further, the side-back installation module is connected to two sides of the frame unit.

Further, the side-back installation module includes two L-shaped brackets, one side of each L-shaped bracket is connected with a side of the frame unit, and the other side of the L-shaped bracket is connected with an automatic production line.

Further, one side of the L-shaped bracket is connected with the side of the frame unit by screw bolts, and the other side of the L-shaped bracket is provided with mounting holes.

Further, the side-back installation module is configured as a portal frame or a C-shaped bracket structure.

Further, the control unit is configured as a pneumatic control unit or a motor control unit.

Further, the triplet unit includes a transducer, an amplitude modulator and a welding head which are connected in sequence.

Further, the function integration module further includes a plurality of sensors for acquiring welding pressure, welding speed and welding distance, and the plurality of sensors are respectively connected with the control unit.

Compared with the prior art, the present invention adopts a modular design, and divides the ultrasonic metal welding frame into a function integration module and an installation module, the installation module is detachably connected to the bottom or the side of the function integration module, so that the installation module can be adapted to a vertical installation situation or a back installation situation respectively. When the vertical installation is performed, the function integration module can be easily matched with a platform of the automatic production line or a bottom installation module of a specific size to form a complete welding machine. At the same time, it can reserve the operating space as large as possible and provide control convenience for the automatic production line.

When the back installation is performed, the function integration module can be conveniently matched with the automatic production line or a crossbeam of a portal frame, thereby solving the problem of no installation space under the weld machine, expanding the operating space and ensuring the convenience of operation at the same time.

### BRIEF DESCRIPTION OF THE DRAWINGS

FIG. 1 is a structural schematic view of a traditional ultrasonic metal welding frame;
FIG. 2 is a front structural schematic view of the present invention in a vertical installation situation;
FIG. 3 is a side structural schematic view of the present invention in a vertical installation situation;
FIG. 4 is a front structural schematic view of the present invention in a vertical installation situation; and
FIG. 5 is a side structural schematic view of the present invention in a vertical installation situation;

In the figures: 1, base member; 2, frame member; 3, control member; 4, execution member; 5, operation space; A, function integration module; B, bottom installation module; C, side-back installation module.

### DESCRIPTION OF THE EMBODIMENTS

The present invention is described in detail below in combination with the drawings and specific embodiments.

### Embodiments:

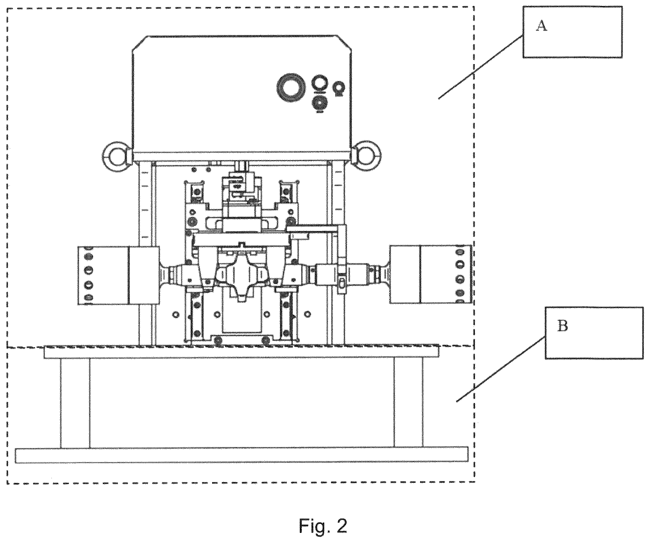

As shown in FIGs. 2 to 5, a modular ultrasonic metal welding frame includes a functional integration module A for performing a welding operation. An installation module is detachably connected to a bottom or a side of the functional integration module A respectively. The functional integration module A includes a control unit, an execution unit, a triplet unit, and a frame unit for providing a support and installation surface, wherein the control unit can use a pneumatic control unit or a motor control unit. The triplet unit includes a transducer, an amplitude modulator and a welding head which are connected in sequence. In addition, the function integration module A further includes a plurality of sensors for acquiring welding pressure, welding speed and welding distance, which are respectively connected with the control unit.

According to the requirements of different installation situations, the installation module may be a vertical installation module B or a side-back installation module C.

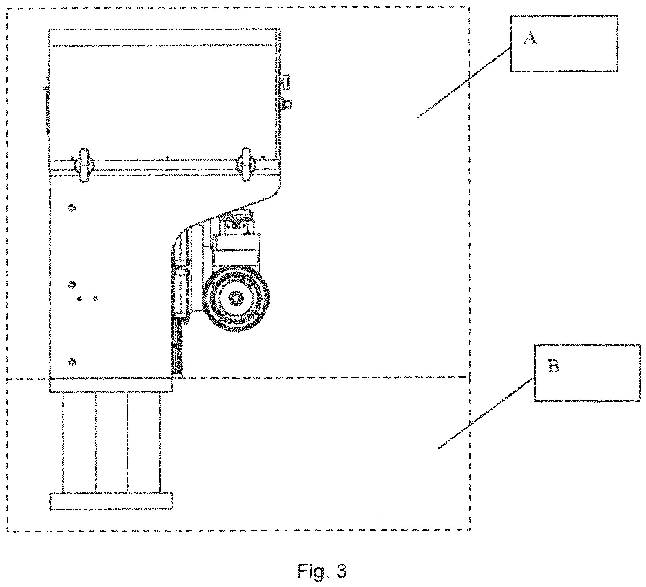

In case of a vertical installation situation, as shown in FIGs. 2 and 3, the vertical installation module B is connected with a bottom of the frame unit, as such, a first modular configuration structure of the present invention is realized, which consists of the function integration module A and the vertical installation module B. The function integration module A is the main function module of the welding machine and consists of the control unit at the top which can be implemented by pneumatic control, motor control, or remote control, the execution unit at the middle front end, the frame unit in the middle for providing support and installation surface, the triplet unit consisting of the transducer, the amplitude modulator and the welding head, which supports rapid disassembly and assembly and has the function of converting the electrical energy with a certain frequency from the ultrasonic generator into the mechanical energy with the same frequency output from the welding head, and in the meanwhile provides clamping points for installation, as well as a series of sensors, which can realize the setting and monitoring of a series of welding related parameters, such as welding pressure output and real-time monitoring, welding time output and real-time monitoring, welding distance output and real-time monitoring, welding speed output and real-time monitoring. The vertical installation module B is configured as a bottom installation module, which can meet the requirements of vertical installation of the welding machine. The structure and height of the vertical installation module B are not limited by the function integration module A, and the vertical installation module B can be designed flexibly according to customer's actual application requirements and a space size of a site. The structure and size may be customized, or the vertical installation module B can be replaced by a platform of an automatic production line, thus the operating space is greatly increased. This configuration is designed for vertical installation application, which greatly improves the operating space and expands the application situations and ranges of the welding machine. In addition, a connecting manner between the function integration module A and the vertical installation module B is not limited to the manner of being fixed one above another, and it may be other structures having the same function or effect. When this configuration is matched with an automatic production line, it can also be set in a multi-station assembly line.

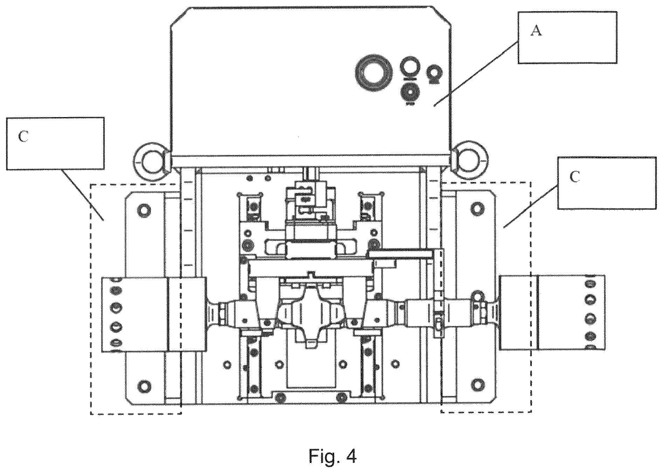

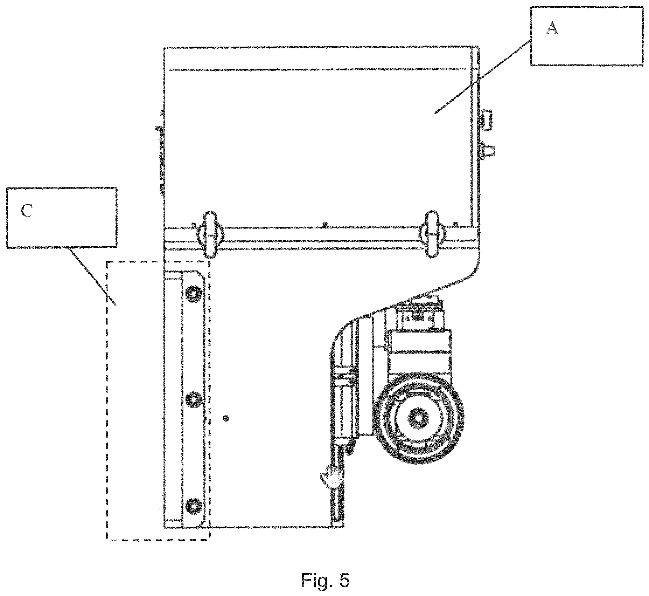

In case of a side-back installation situation, as shown in FIGs. 4 and 5, the side-back installation module C is connected with two sides of the frame unit, as such, a second modular configuration structure of the present invention is realized, which consists of the function integration module A and the side-back installation module C. The function integration module A is the main function module of the welding machine and consists of the control unit at the top which can be implemented by pneumatic control, motor control, or remote control, the execution unit at the middle front end, the frame unit in the middle for providing support and installation surface, the triplet unit consisting of the transducer, the amplitude modulator and the welding head, which supports rapid disassembly and assembly and has the function of converting the electrical energy with a certain frequency from the ultrasonic generator into the mechanical energy with the same frequency output from the welding head, and in the meanwhile provides clamping points for installation at the same time, as well as a series of sensors, which can realize the setting and monitoring of a series of welding related parameters, such as welding pressure output and real-time monitoring, welding time output and real-time monitoring, welding distance output and real-time monitoring, welding speed output and real-time monitoring. The side-back installation module C is configured for back installation and is illustrated as two L-shaped brackets, one side of each L-shaped bracket is connected with the side of the module A, and the other side of the L-shaped bracket has mounting holes, which can meet the back installation requirements of the welding machine. The structure and height of the side-back installation module C are not limited by the function integration module A. The side-back installation module C can be designed flexibly according to customer's actual application requirements and a space size of a site. The structure and size may be customized, or it may be replaced by a portal frame or installation plane of an automatic production line, so that the operating space can also be greatly increased. This configuration is designed for the back installation application, which solves the problem that there is no installation space right below the welding machine, greatly improves the operating space, and expands application situations and ranges of welding. In addition, a connecting manner between the function integration module A and the side-back installation module C is not limited to the manner of using L-shaped brackets and screw bolt connection shown in the figures, other structures having the same function may be used, for example, it may be a portal frame, or C-shaped bracket structure with the same function. When this configuration is adapted to an automatic production line, it can also be set in a multi-station assembly line.

In summary, the present invention adopts the modular ultrasonic metal welding frame, and a variety of configuration structures can be selected. For different application requirements, each configuration can provide an operating space as large as possible and convenient for the matching automatic production line.

## Claims

1. A modular ultrasonic metal welding frame, **characterized by** comprising a functional integration module (A) for performing welding operation, and an installation module detachably connected to a bottom or side of the function integration module (A) respectively, wherein the function integration module (A) comprises a control unit, an execution unit, a triplet unit, and a frame unit for providing a support and installation surface.

2. The modular ultrasonic metal welding frame according to claim 1, **characterized in that** the installation module is configured as a vertical installation module (B) or a side-back installation module (C).

3. The modular ultrasonic metal welding frame according to claim 2, **characterized in that** the vertical installation module (B) is connected to a bottom of the frame unit.

4. The modular ultrasonic metal welding frame according to claim 2, **characterized in that** the side-back installation module (C) is connected to two sides of the frame unit.

5. The modular ultrasonic metal welding frame according to claim 4, **characterized in that** the side-back installation module (C) comprises two L-shaped brackets, one side of each L-shaped bracket is connected with a side of the frame unit, and the other side of the L-shaped bracket is connected with an automatic production line.

6. The modular ultrasonic metal welding frame according to claim 5, **characterized in that** one side of the L-shaped bracket is connected with the side of the frame unit by screw bolts, and the other side of the L-shaped bracket is provided with mounting holes.

7. The modular ultrasonic metal welding frame according to claim 2, **characterized in that** the side-back installation module (C) is configured as a portal frame or a C-shaped bracket structure.

8. The modular ultrasonic metal welding frame according to claim 1, **characterized in that** the control unit is configured as a pneumatic control unit or a motor control unit.

9. The modular ultrasonic metal welding frame according to claim 1, **characterized in that** the triplet unit comprises a transducer, an amplitude modulator and a welding head which are connected in sequence.

10. The modular ultrasonic metal welding frame according to claim 1, **characterized in that** the function integration module (A) further comprises a plurality of sensors for acquiring welding pressure, welding speed and welding distance, and the plurality of sensors are respectively connected with the control unit.
